# EUROPEAN PATENT APPLICATION

(11) **EP 4 579 430 A1**
(43) Date of publication of application: **02.07.2025**
(21) Application number: 24198943.3
(22) Date of filing: 06.09.2024
(51) Int. Cl.: G06F 3/14

(54) **SCREEN PROJECTING DISPLAY METHOD AND APPARATUS, STORAGE MEDIUM AND CHIP**

(30) Priority: 27.12.2023 CN 202311825516
(71) Applicant: Xiaomi EV Technology Co., Ltd., 100176 Beijing (CN)
(72) Inventor: WANG, Pan, Beijing, 100176 (CN); HUANG, Wenxiong, Beijing, 100176 (CN); XU, Lin, Beijing, 100176 (CN)
(74) Representative: Stöckeler, Ferdinand

(57) **Abstract**

The invention relates to the technical field of electronic technology, in particular to a screen projecting display method and apparatus, a storage medium and a chip. The screen projecting display method includes: determining (S11) a display mode of a screen projecting content on a first device, where, the screen projecting content includes an image or a video obtained by rendering according to a screen size of the first device; and generating (S12) a target screen projecting content corresponding to a target application according to the display mode and a screen size of a second device, and displaying the target screen projecting content on the second device, where, the target application includes an application generating a screen projecting request in the first device.

## Description

### TECHNICAL FIELD

The invention relates to the technical field of electronic technology, in particular to a screen projecting display method and apparatus, a storage medium and a chip.

### BACKGROUND OF THE INVENTION

In the related art, a screen projecting display is generally displayed at a receiving end according to a screen size of a mobile phone.

### SUMMARY OF THE INVENTION

In order to overcome problems existing in the related art, the invention provides a screen projecting display method and apparatus, a storage medium and a chip.

According to a first aspect of examples of the invention, a screen projecting display method is provided and includes:
determining a display mode of a screen projecting content on a first device, where the screen projecting content includes an image or a video obtained by rendering according to a screen size of the first device; and
generating, according to the display mode and a screen size of a second device, a target screen projecting content corresponding to a target application, and displaying the target screen projecting content on the second device, where the target application includes an application generating a screen projecting request in the first device.

Optionally, the method further includes:
generating, in a case that the second device receives the screen projecting content sent by the first device, a screen projecting component, associating the screen projecting component with the screen projecting content, and displaying the screen projecting component and the screen projecting content on the second device; and
determining, in response to trigger operations for the screen projecting component, the display mode of the screen projecting content on the first device.

Optionally, generating, according to the display mode and the screen size of the second device, the target screen projecting content corresponding to the target application includes:
determining, according to the display mode and the screen size of the second device, a target rendered size; and
re-rendering, according to the target rendered size, the target screen projecting content corresponding to the target application.

Optionally, determining, according to the display mode and the screen size of the second device, the target rendered size includes:
taking, in a case that the display mode is a landscape display, the screen size of the second device as the target rendered size.

Optionally, determining, according to the display mode and the screen size of the second device, the target rendered size includes:
taking, in a case that the display mode is a vertical screen display, a width of the screen size of the second device as a length of the target rendered size; and
obtaining, according to the length of the target rendered size, the target rendered size by determining a width of the target rendered size.

Optionally, determining the display mode of the screen projecting content on the first device includes:
determining, in a case that the first device supports the landscape display of the screen projecting content, the display mode of the screen projecting content as a landscape display mode;
determining, in a case that the first device supports the vertical screen display of the screen projecting content, the display mode of the screen projecting content as a vertical screen display mode; and
determining, in a case that the first device simultaneously supports the landscape display and the vertical screen display of the screen projecting content, the display mode of the screen projecting content as a landscape display mode.

Optionally, the trigger operations include at least one of clicking the screen projecting component, dragging the screen projecting component, or long pressing the screen projecting component.

According to a second aspect of examples of the invention, a screen projecting display apparatus is provided and includes:
a determining component, configured to determine a display mode of a screen projecting content on a first device, where the screen projecting content includes an image or a video obtained by rendering according to a screen size of the first device; and
an executor, configured to generate, according to the display mode and a screen size of a second device, a target screen projecting content corresponding to a target application, and display the target screen projecting content on the second device, where the target application includes an application generating a screen projecting request in the first device.

Optionally, where the determining component is further configured to:
generate, in a case that the second device receives the screen projecting content sent by the first device, a screen projecting component, associate the screen projecting component with the screen projecting content, and display the screen projecting component and the screen projecting content on the second device; and
determine, in response to trigger operations for the screen projecting component, the display mode of the screen projecting content on the first device.

Optionally, where the executor is further configured to:
determine, according to the display mode and the screen size of the second device, a target rendered size; and
re-render, according to the target rendered size, the target screen projecting content corresponding to the target application.

Optionally, where the executor is further configured to:
take, in a case that the display mode is a landscape display, the screen size of the second device as the target rendered size.

Optionally, where the executor is further configured to:
take, in a case that the display mode is a vertical screen display, a width of the screen size of the second device as a length of the target rendered size; and
obtain, according to the length of the target rendered size, the target rendered size by determining a width of the target rendered size.

Optionally, where the determining component is further configured to:
determine, in a case that the first device supports the landscape display of the screen projecting content, the display mode of the screen projecting content as a landscape display mode;
determine, in a case that the first device supports the vertical screen display of the screen projecting content, the display mode of the screen projecting content as a vertical screen display mode; and
determine, in a case that the first device simultaneously supports the landscape display and the vertical screen display of the screen projecting content, the display mode of the screen projecting content as the landscape display mode.

According to a third aspect of examples of the invention, a screen projecting display apparatus is provided and includes:
a first processor; and
a memory for storing instructions capable of being executed by the first processor; where
the first processor is configured to:
   determine a display mode of a screen projecting content on a first device, where the screen projecting content includes an image or a video obtained by rendering according to a screen size of the first device; and
   generate, according to the display mode and a screen size of a second device, a target screen projecting content corresponding to a target application, and display the target screen projecting content on the second device, where the target application includes an application generating a screen projecting request in the first device.

According to a fourth aspect of examples of the invention, a non-temporary computer readable storage medium is provided, storing computer program instructions, where the program instructions, when executed by a processor, implement steps of the screen projecting display method provided by the first aspect of the invention.

According to a fifth aspect of examples of the invention, a chip is provided, which includes a second processor and an interface; where the second processor is configured to read instructions to execute the screen projecting display method of the first aspect.

The technical schemes provided by the examples of the invention may include the following beneficial effects: the display mode of the screen projecting content on the first device is determined, the target screen projecting content corresponding to the target application is generated according to the display mode and the screen size of the second device, and the target screen projecting content is displayed on the second device. A target screen projecting content adaptive to a screen of the second device is generated and displayed on the second device, and on the basis of avoiding deformation of the target screen projecting content, the screen of the second device is fully used.

It is to be understood that the general description above and the following detailed description are merely illustrative and explanatory, and do not limit the examples of the invention.

### BRIEF DESCRIPTION OF DRAWINGS

Accompanying drawings here are incorporated into the specification and form a part of the specification, and show principles consistent with the examples of the invention and used to explain the examples of the invention with the specification.
Fig. 1 is a flow diagram of a screen projecting display method shown according to an example.
Fig. 2 is a flow diagram of step S11 shown according to an example.
Fig. 3 is a flow diagram of step S12 shown according to an example.
Fig. 4 is a flow diagram of step S21 shown according to an example.
Fig. 5 is another flow diagram of step S21 shown according to an example.
Fig. 6a is a schematic diagram of a target screen projecting content shown according to an example.
Fig. 6b is another schematic diagram of a target screen projecting content shown according to an example.
Fig. 7 is a flow diagram of a screen projecting display method shown according to an example.
Fig. 8 is a block diagram of a screen projecting display apparatus shown according to an example.
Fig. 9 is another block diagram of a screen projecting display apparatus shown according to an example.

### DETAILED DESCRIPTION OF THE INVENTION

Examples will be described in detail here, as exemplified in the accompanying drawings. In response to determining that the description below refers to the accompanying drawings, unless otherwise indicated, the same numbers in different accompanying drawings indicate the same or similar elements. Embodiments described in the following examples do not represent all possible embodiments consistent with the examples of the invention. Rather, the examples are merely examples of apparatuses and methods that are consistent with some aspects of the examples of the invention as detailed in the appended claims.

It needs to be noted that all actions for obtaining signals, information or data in the invention are carried out in accordance with relevant data protection regulations and policies of the country where they are located, and with the authorization of the owner of corresponding apparatuses.

As the background technology says, screen projecting display is generally displayed at a receiving end according to a screen size of a mobile phone, and cannot use strengths of large screen display in a case that the receiving end is a large screen device. For example, on the head unit, a central control screen of the head unit is a large landscape screen, directly displays an application picture according to a screen size of a sending end, for example, the sending end may be the mobile phone, causing that the picture is not artistic, and a large screen of the central control screen of the head unit cannot be fully used.

It is worth noting that an existing picture projecting protocol includes the following:
digital living network alliance (DLNA): is supported by most intelligent terminal devices, and generally used to project streaming videos. The DLNA works on a universal plug and play (UPNP) stack, generally, a uniform resource locator (URL) of a video is sent to a receiving end by the sending end, and the receiving end receives the URL and begins to buffer and play, where the URL may be an address.

Airplay: an audio and video projecting protocol, may be used for projecting streaming videos, and may also be used for projecting mirroring pictures of a mobile phone. The audio and video projecting technology of Airplay supports a URL push similar to DLNA, and also supports a push stream; and the sending end establishes a live stream, and the receiving end directly plays this live stream.

The inventor found that the DLNA protocol can merely deliver the streaming videos, and cannot project a real-time mobile phone picture. Although the Airplay protocol may deliver a mobile phone picture, it does not support to control the sending end at the receiving end, and can merely display a picture according to a size of the sending end.

In view of this, the present discloses provides a screen projecting display method and apparatus, a storage medium and a chip, and on the basis of avoiding deformation of a screen projecting content, the screen projecting content adaptive to the receiving end is generated, so as to fully use a screen of the receiving end.

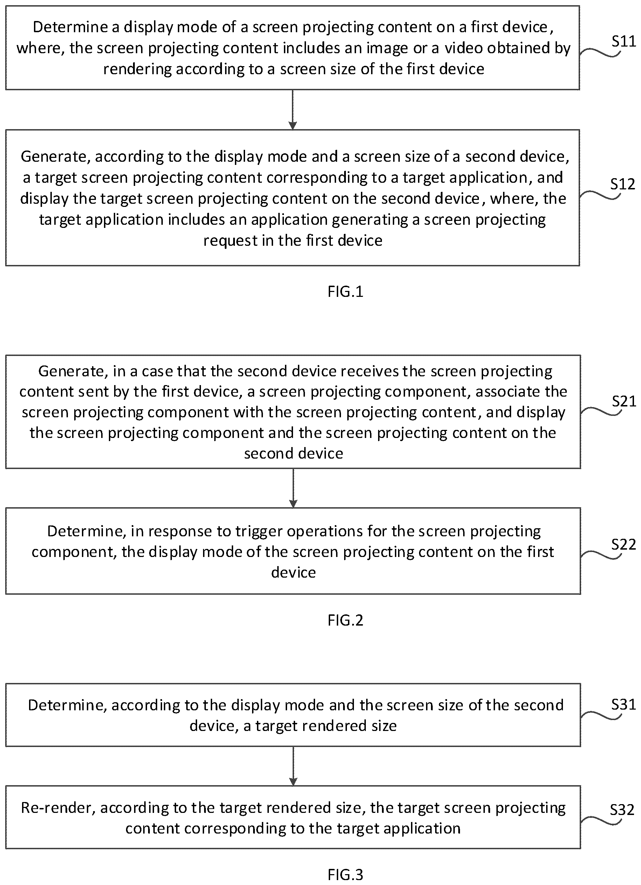

Fig. 1 is a flow diagram of a screen projecting display method shown according to an example. As shown in Fig. 1, the screen projecting display method is applied to a terminal, and may include the following steps.

In step S11, a display mode of a screen projecting content on a first device is determined, where the screen projecting content includes an image or a video obtained by rendering according to a screen size of the first device.

It is worth noting that the first device may be a mobile phone, a wearable device and other terminal devices with relatively small screens, and a second device may be a head unit, a central control screen, a rear display screen, a head-up display screen or a vehicle instrument screen, a rear central handrail control screen and devices with relatively large screens. The first device and the second device establish a communication connection, the first device and the second device perform screen projection and may include: a screen projecting request is sent to the second device through a wire communication mode or a wireless communication mode by the first device, and the screen projecting request includes the display mode of the screen projecting content on the first device, the screen projecting content is rendered according to the screen size of the first device. The second device determines the display mode of the screen projecting content according to the screen projecting request.

Taking an example that the mobile phone is the first device and the head unit is the second device, after the mobile phone and the head unit establish the communication connection, a screen projecting request is sent to the head unit by the mobile phone, and the screen projecting request includes the display mode of the screen projecting content on the mobile phone, the screen projecting content is rendered according to the screen size of the mobile phone. The head unit determines the display mode of the screen projecting content according to the screen projecting request.

In step S12, a target screen projecting content corresponding to a target application is generated according to the display mode and the screen size of the second device, the target screen projecting content is displayed on the second device, and the target application includes an application generating a screen projecting request in the first device.

Taking an example that the mobile phone is the first device and the head unit is the second device, a screen projecting component on a screen of the head unit is triggered by a user, an application for screen projection on the mobile phone is controlled, a display object of the application is adjusted to the head unit, and the target screen projecting content is re-rendered according to a display mode of the screen projecting content of the corresponding application on the mobile phone and a screen size of the head unit, and the target screen projecting content is displayed on the screen of the head unit.

In examples of the invention, in response to determining that a screen is projected to the second device by the first device, the display mode of the screen projecting content generated according to the screen size of the first device is determined, the target screen projecting content adaptive to the screen of the second device is generated according to the display mode and the screen size of the second device, the target screen projecting content is displayed on the second device, and thus, on the basis of avoiding the deformation of the target screen projecting content, the screen of the second device may be fully used.

In order to facilitate those skilled in the art more understanding the screen projecting display method provided by the invention, related steps involved in the screen projecting display method are illustrated in detail below.

In a possible embodiment, as shown in Fig. 2, the method may further include:
In step S21, in a case that the second device receives the screen projecting content sent by the first device, a screen projecting component is generated, the screen projecting component is associated with the screen projecting content, and the screen projecting component and the screen projecting content are displayed on the second device; and
In step S22, in response to trigger operations for the screen projecting component, the display mode of the screen projecting content on the first device is determined.

It is to be understood that the screen projecting component may be a component with any shape, and the screen projecting component is associated with an application that has a screen projecting request in the first device, such as a map application on a mobile phone, a video display application, a browser and other applications. A target application for screen projection on the first device is controlled by triggering the screen projecting component on a display interface of the second device, and a target screen projecting content is generated according to the display mode and the screen size of the second device.

Taking an example that the mobile phone is the first device and the head unit is the second device, in response to determining that the head unit receives the screen projecting request sent by the head unit, the screen projecting component is generated, the screen projecting component is associated with the screen projecting content generated according to the screen size of the head unit, and the screen projecting content and the screen projecting component are displayed on the screen of the head unit; and in response to trigger operations for the screen projecting component on the screen of the head unit, the display mode of the screen projecting content on the mobile phone is determined.

In the examples of the invention, the application on the first device may be adjusted to regenerate an icon screen projecting content adaptive to the screen size of the second device, and display on the second device by triggering the screen projecting component on the screen of the second device. The screen projecting content of the first device may be controlled through the second device by a user, screen projecting control may also be performed in response to determining that the first device is not near the user, and thus, the flexibility of screen projecting is improved.

In a possible embodiment, in step S22, the trigger operations may include at least one of clicking the screen projecting component, dragging the screen projecting component, or long pressing the screen projecting component.

It is to be understood that the trigger operations may further include other operations for the screen projecting component, which is not limited in the invention.

For example, in response to determining that the user clicks the screen projecting component on the second device, or drags the screen projecting component on the second device, or long presses the screen projecting component on the second device, the second device responds to the corresponding operation, and the display mode of the screen projecting content on the first device is determined.

In a possible embodiment, as shown in Fig. 3, in step S12, generating the target screen projecting content corresponding to the target application according to the display mode and the screen size of the second device may include:
in step S31, a target rendered size is determined according to the display mode and the screen size of the second device.
In step S32, the target screen projecting content corresponding to the target application is re-rendered according to the target rendered size.

It is to be understood that in order to ensure that the generated target screen projecting content does not deform and is adaptive to the screen of the second device, the target rendered size needs to be determined according to the display mode of the screen projecting content and the screen size of the second device, and the target screen projecting content is obtained by re-rendering according to the target rendered size, where the target screen projecting content is obtained by re-rendering according to the target rendered size, i.e., the target screen projecting content is obtained by re-rendering the screen projecting content according to the target rendered size.

In the embodiment of the invention, the target rendered size is determined according to the display mode of the screen projecting content and the screen size of the second device, the target screen projecting content is obtained by re-rendering the screen projecting content according to the target rendered size, on the basis of ensuring not deformation of the target screen projecting content, the screen of the second device is adaptive, and the screen of the second device is fully used.

In a possible embodiment, determining the display mode of the screen projecting content on the first device may include:
in a case that landscape display of the screen projecting content is supported by the first device, the display mode of the screen projecting content is determined as a landscape display mode;
in a case that vertical screen display of the screen projecting content is supported by the first device, the display mode of the screen projecting content is determined as a vertical screen display mode; and
in a case that the landscape display and the vertical screen display of the screen projecting content are simultaneously supported by the first device, the display mode of the screen projecting content is determined as a landscape display mode.

It is to be understood that the display mode of the screen projecting content on the first device is related to the landscape and vertical screen supporting condition of the screen projecting content on the first device, and, thus, the display mode of the screen projecting content may be determined according to the display mode of the first device supporting the screen projecting content.

It is worth noting that in the case of the landscape display mode, the generated target screen projecting content may completely cover the screen of the second device, and thus, the screen projecting content is determined as the landscape display in the case that the landscape display and the vertical screen display of the screen projecting content are simultaneously supported by the first device.

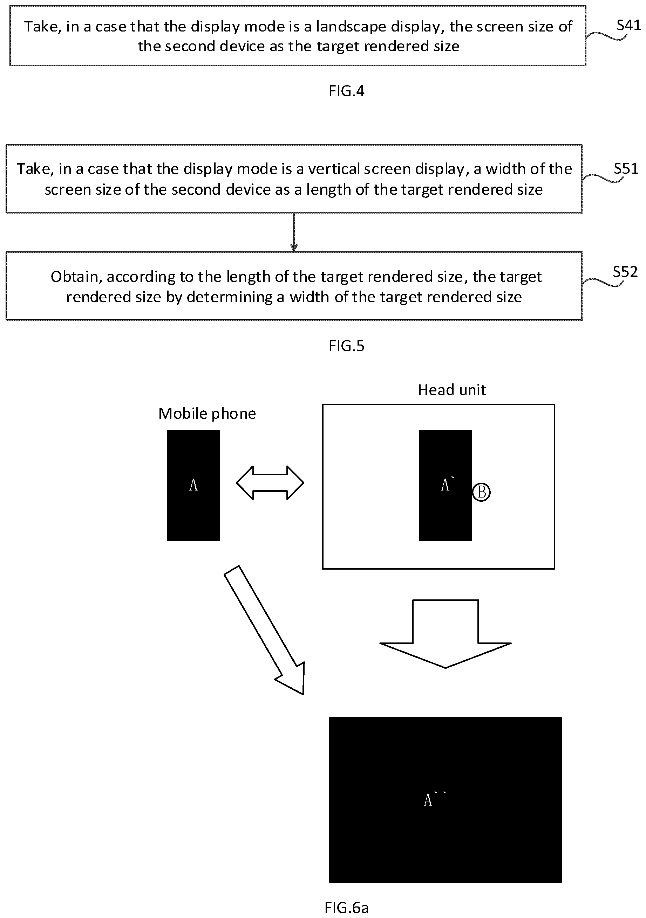

In a possible embodiment, as shown in Fig. 4, in step S31, determining the target rendered size according to the display mode and the screen size of the second device may include:
in step S41, the screen size of the second device is taken as the target rendered size in the case that the display mode is landscape display.

It is to be understood that in the case that the display mode is the landscape display, in order to fully use the screen of the second device, the screen size of the second device is directly taken as the target rendered size.

As shown in Fig. 6a, a screen of a mobile phone displays a display content A corresponding to a map application, and the mobile phone simultaneously supports landscape display and vertical screen display of the display content A of the map application. In response to determining that a screen is projected to a head unit by the mobile phone, the map application is controlled, a target screen projecting content A" adaptive to a screen of the head unit is obtained by re-rendering according to a screen size of the head unit, and the screen projecting content A" is displayed on the screen of the head unit. Alternatively, in response to determining that a screen projecting content A' sent by the mobile phone is received by the head unit, a screen projecting component B is generated, and the screen projecting content A' completely consisting of a display content A and the screen projecting component B associated with the screen projecting content A' are displayed on the screen of the head unit. The screen projecting component B of the screen of the head unit is triggered by a user, the map application of the mobile phone is controlled, the target screen projecting content A" is obtained by re-rendering according to the screen size of the head unit, and the screen projecting content A" is displayed on the screen of the head unit.

In a possible embodiment, as shown in Fig. 5, in step S31, determining the target rendered size according to the display mode and the screen size of the second device may include:
in step S51, in the case that the display mode is the vertical screen display, a width of the screen size of the second device is taken as a length of the target rendered size.
In step S52, a width of the target rendered size is determined according to the length of the target rendered size, and the target rendered size is obtained.

It is to be understood that in the case that the display mode is the vertical screen display, in order to fully use the screen of the second device, the width of the screen size of the second device is directly taken as the length of the target rendered size, and according to a proportional relation between the length of the target rendered size and a length of the screen size of the first device, a width of the screen size of the first device is enlarged and taken as the width of the target rendered size.

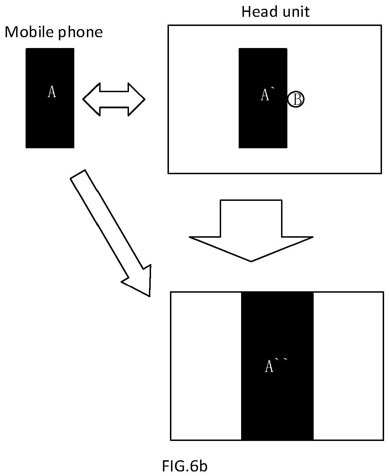

As shown in Fig. 6b, a display content A corresponding to a take-out application is displayed on the screen of the mobile phone, and vertical screen display of the display content A of the take-out application is supported by the mobile phone. In response to determining that a screen is projected to a head unit by the mobile phone, the take-out application is controlled to take the width of the screen size of the head unit as the length of the target rendered size, the width of the target rendered size is determined to obtain the target rendered size according to the length of the target rendered size, a target screen projecting content A" is obtained by re-rendering, and the screen projecting content A" is displayed on the screen of the head unit. Alternatively, in response to determining that a screen projecting content A' sent by the mobile phone is received by the head unit, a screen projecting component B is generated, and the screen projecting content A' completely consisting of a display content A and the screen projecting component B associated with the screen projecting content A' are displayed on the screen of the head unit. The screen projecting component B of the screen of the head unit is triggered by the user, the map application of the mobile phone is controlled to take the width of the screen size of the head unit as the length of the target rendered size, the width of the target rendered size is determined to obtain the target rendered size according to the length of the target rendered size, the target screen projecting content A" is obtained by re-rendering, and the screen projecting content A" is displayed on the screen of the head unit.

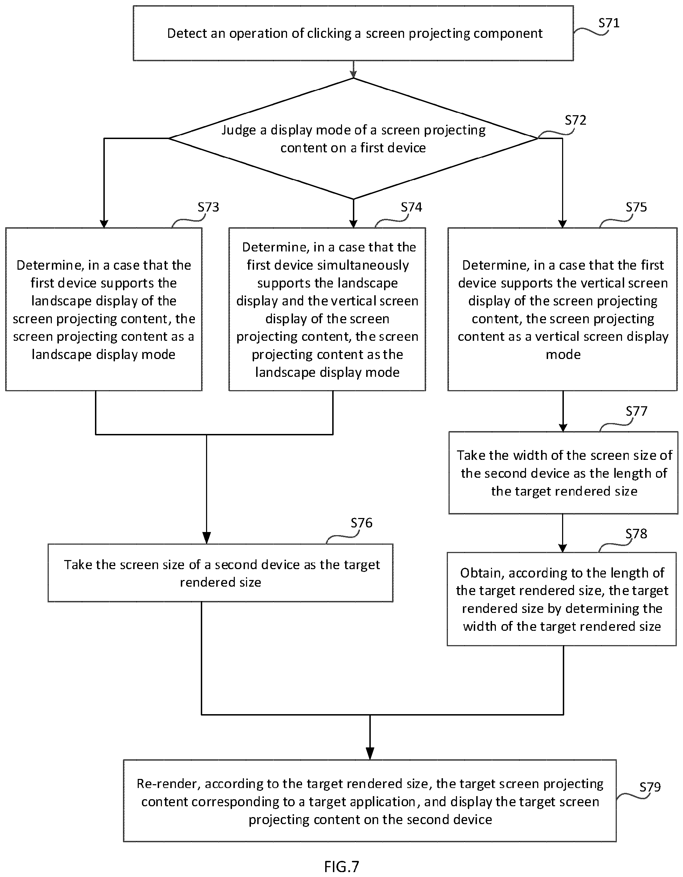

As shown in Fig. 7, the screen projecting display method is illustrated below with a complete example.

In step S71, an operation of clicking the screen projecting component is detected.

In step S72, the display mode of the screen projecting content on the first device is judged.

In step S73, in the case that the landscape display of the screen projecting content is supported by the first device, the screen projecting content is determined as the landscape display mode, and step S76 is executed.

In step S74, in the case that the landscape display and the vertical screen display of the screen projecting content are simultaneously supported by the first device, the screen projecting content is determined as the landscape display mode, and step S76 is executed.

In step S75, in the case that the vertical screen display of the screen projecting content is supported by the first device, the screen projecting content is determined as the vertical screen display mode, and steps S77-S78 are executed.

In step S76, the screen size of the second device is taken as the target rendered size, and step S79 is executed.

In step S77, the width of the screen size of the second device is taken as the length of the target rendered size.

In step S78, the width of the target rendered size is determined according to the length of the target rendered size, the target rendered size is obtained, and step S79 is executed.

In step S79, the target screen projecting content corresponding to the target application is re-rendered according to the target rendered size, and the target screen projecting content is displayed on the second device.

It is to be understood that in the invention, by triggering the screen projecting component associated with the screen projecting content on the second device, the target screen projecting content adaptive to the screen of the second device is generated, the target screen projecting content is displayed on the second device, on the basis of avoiding deformation of the target screen projecting content, the screen of the second device is fully used, and the entire process may be directly completed on the second device without operating the first device.

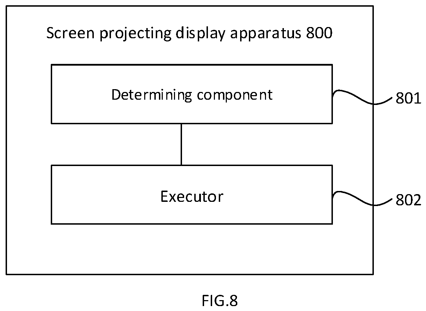

Fig. 8 is a block diagram of a screen projecting display apparatus 800 shown according to an example. Referring to Fig. 8, the screen projecting display apparatus 800 includes a determining component 801 and an executor 802.

The determining component 801 is configured to determine a display mode of a screen projecting content on a first device, where the screen projecting content includes an image or a video obtained by rendering according to a screen size of the first device.

The executor 802 is configured to generate, according to the display mode and a screen size of a second device, a target screen projecting content corresponding to a target application, and display the target screen projecting content on the second device, where the target application includes an application generating a screen projecting request in the first device.

In examples of the invention, in response to determining that a screen is projected to the second device by the first device, the display mode of the screen projecting content generated according to the screen size of the first device is determined, the target screen projecting content adaptive to the screen of the second device is generated according to the display mode and the screen size of the second device, the target screen projecting content is displayed on the second device, and thus, on the basis of avoiding the deformation of the target screen projecting content, the screen of the second device may be fully used.

In a possible embodiment, the determining component 801 is configured to generate, in response to determining that the screen projecting content sent by the first device is received by the second device, a screen projecting component, associate the screen projecting component with the screen projecting content, and display the screen projecting component and the screen projecting content on the second device; and determine, in response to trigger operations for the screen projecting component, the display mode of the screen projecting content on the first device.

In a possible embodiment, the trigger operations may include at least one of clicking the screen projecting component, dragging the screen projecting component, or long pressing the screen projecting component.

In a possible embodiment, the executor 802 is configured to determine, according to the display mode and the screen size of the second device, a target rendered size; and re-render, according to the target rendered size, a target screen projecting content corresponding to a target application.

In a possible embodiment, the determining component 801 is configured to determine, in a case that landscape display of the screen projecting content is supported by the first device, the screen projecting content as a landscape display mode; alternatively, determine, in a case that vertical screen display of the screen projecting content is supported by the first device, the screen projecting content as a vertical screen display mode; alternatively, determine, in a case that the landscape display and the vertical screen display of the screen projecting content are simultaneously supported by the first device, the screen projecting content as the landscape display mode.

In a possible embodiment, the executor 802 is configured to take, in a case that the display mode is the landscape display, the screen size of the second device as the target rendered size.

In a possible embodiment, the executor 802 is configured to take, in a case that the display mode is the vertical screen display, a width of the screen size of the second device as a length of the target rendered size; and determine, according to the length of the target rendered size, a width of the target rendered size, so as to obtain the target rendered size.

For the screen projecting display apparatus 800 in the above example, specific modes of each component executing operations have been described in detail in the related examples of the method and are not described and illustrated in detail here.

The invention further provides a non-temporary computer readable storage medium, storing computer program instructions, where the program instructions, when executed, implement the steps of the screen projecting display method provided by the invention.

The invention further provides a screen projecting display apparatus 900, including:
a first processor 920; and
a memory 904 for storing instructions capable of being executed by the first processor 920; where
the first processor 920 is configured to:
   determine a display mode of a screen projecting content on a first device, where the screen projecting content includes an image or a video obtained by rendering according to a screen size of the first device; and
   generate, according to the display mode and a screen size of a second device, a target screen projecting content corresponding to a target application, and display the target screen projecting content on the second device, where the target application includes an application generating a screen projecting request in the first device.

In examples of the invention, in response to determining that a screen is projected to the second device by the first device, the display mode of the screen projecting content generated according to the screen size of the first device is determined, the target screen projecting content adaptive to the screen of the second device is generated according to the display mode and the screen size of the second device, the target screen projecting content is displayed on the second device, and, thus, on the basis of avoiding the deformation of the target screen projecting content, the screen of the second device is fully used.

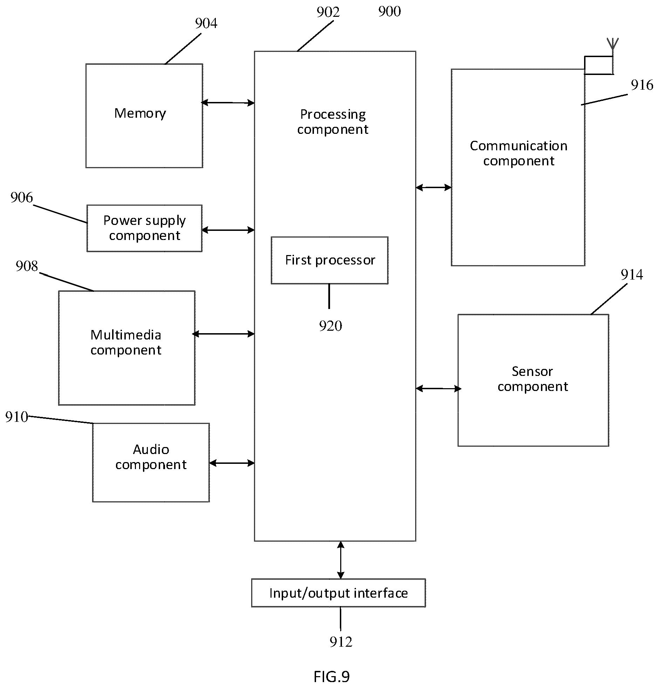

Fig. 9 is a block diagram of a screen projecting display apparatus 900 shown according to an example. For example, the screen projecting display apparatus 900 may be a mobile telephone, a computer, a digital broadcasting terminal, a message transceiver, a game console, a slab device, a medical device, fitness equipment, a personal digital assistant, etc.

Referring to Fig. 9, the screen projecting display apparatus 900 may include the following one or more components: a processing component 902, a memory 904, a power supply component 906, a multimedia component 908, an audio component 910, an input/output interface 912, a sensor module 914, and a communication component 916.

The processing component 902 usually controls integral operations of the screen projecting display apparatus 900, such as operations related to display, phone call, data communication, camera operation and record operation. The processing component 902 may include one or more first processors 920 to execute instructions, so as to complete all or part of steps of the above methods. In addition, the processing component 902 may include one or more modules, facilitating interaction between the processing component 902 and other components. For example, the processing component 902 may include a multimedia module, facilitating interaction between the multimedia component 908 and the processing component 902.

The memory 904 is configured to store various types of data to support operations on the apparatus 900. Examples of these data include instructions of any application program or method operated on the screen projecting display apparatus 900, contact data, telephone directory data, messages, pictures, videos and the like. The memory 904 may be implemented through any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 906 provides power for various components of the screen projecting display apparatus 900. The power supply component 906 may include a power management system, one or more power sources, and other components associated with generation, management and distribution of electric power of the screen projecting display apparatus 900.

The multimedia component 908 includes a screen providing an output interface between the screen projecting display apparatus 900 and a user. In some examples, the screen may include a liquid crystal display (LCD) and a touch panel (TP). If the screen includes the touch panel, the screen may be implemented as a touch screen to receive an input signal from the user. The touch panel includes one or more touch sensors to sense gestures of touching, sliding and touching the panel. The touch sensors may not merely sense boundaries of touch or sliding actions, but also detect the duration and pressure associated with the touch or sliding actions. In some examples, the multimedia component 908 includes a front camera and/or a rear camera. In response to determining that the screen projecting display apparatus 900 is in an operation mode, such as a shooting mode or a video mode, the front camera and/or the rear camera may receive external multimedia data. Each front camera and the rear camera may be a fixed optical lens system or have focal length and optical zoom capacity.

The audio component 910 is configured to output and/or input audio signals. For example, the audio component 910 includes a microphone (MIC), and in response to determining that the screen projecting display apparatus 900 is in the operation mode, such as a call mode, a record mode and a voice recognition mode, the microphone is configured to receive the external audio signals. The received audio signals may be further stored in the memory 904 or sent by the communication component 916. In some examples, the audio component 910 further includes a loudspeaker for outputting the audio signals.

The input/output interface 912 provides an interface between the processing component 902 and a peripheral interface module, and the above peripheral interface module may be a keyboard, click wheels, buttons and the like. These buttons include but are not limited to: a homepage button, a volume button, a start button and a lock button.

The sensor component 914 includes one or more sensors, and is used for providing state evaluation of all aspects for the screen projecting display apparatus 900. For example, the sensor component 914 may detect an opening/closing state of the screen projecting display apparatus 900, and relative positioning of the components, for example, the components are a display and a keypad of the screen projecting display apparatus 900, and the sensor component 914 may further detect position changes of the screen projecting display apparatus 900 or one component of the screen projecting display apparatus 900, existence or inexistence of touch of the user and the screen projecting display apparatus 900, orientation or accelerating/decelerating of the screen projecting display apparatus 900 and temperature change of the screen projecting display apparatus 900. The sensor component 914 may include a proximity sensor, which is configured to detect existence of nearby objects without any physical touch. The sensor component 914 may further include an optical sensor, such as a CMOS or a CCD image sensor, which is used in imaging application. In some examples, the sensor component 914 may further include an acceleration sensor, a gyroscope sensor, a magnetic sensor, a pressure sensor or a temperature sensor.

The communication component 916 is configured to facilitate wired or wireless communication between the screen projecting display apparatus 900 and other devices. The screen projecting display apparatus 900 may access into a wireless network based on the communication standard, such as WiFi, 2G or 3G, or their combination. In an example, the communication component 916 receives broadcast signals or broadcast related information from an external broadcast management system through a broadcast channel. In an example, the communication component 916 further includes a near-field communication (NFC) module to promote short-range communication. For example, the NFC module may be implemented based on the radio frequency identification (RFID) technology, an infrared data association (IrDA) technology, an ultra wide band (UWB) technology, a Bluetooth (BT) technology and other technologies.

In examples, the screen projecting display apparatus 900 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electrical elements to execute the above screen projecting display methods.

In examples, a non-temporary computer readable storage medium including instructions is further provided, such as the memory 904 including instructions, and the above instructions may be executed by the first processor 920 of the screen projecting display apparatus 900 to complete the above method. For example, the non-temporary computer readable storage medium may be an ROM, a random access memory (RAM), a CD-ROM, a magnetic tape, a floppy disk, an optical data storage device and the like.

In addition to a separate electronic device, the above screen projecting display apparatus may also be a part of the separate electronic device, for example, in an example, the apparatus may be an integrated circuit (IC) or a chip, the integrated circuit may be one IC, and may also be a set of a plurality of ICs; and the chip may include but is not limited to the following types: a graphics processing unit (GPU), a central processing unit (CPU), a field programmable gate array (FPGA), a digital signal processor (DSP), an application specific integrated circuit (ASIC), a system on chip (SoC), etc. The above integrated circuit or chip may be used for executing instructions (or codes), so as to implement the above screen projecting display methods. The executable instructions may be stored in the integrated circuit or chip, may also be acquired from other apparatuses or devices, for example, the integrated circuit or chip includes a second processor, a memory, and an interface for communicating with other apparatuses. The executable instructions may be stored in the memory, and when executed by the second processor, implement the above screen projecting display methods; alternatively, the integrated circuit or chip may receive the executable instructions through the interface and transmit the executable instructions to the second processor for execution, so as to implement the above screen projecting display methods.

In another example, a computer program product is further provided. The computer program product contains a computer program capable of being executed by a programmable apparatus, and the computer program has, when executed by the programmable apparatus, a code part for executing the above screen projecting display methods.

## Claims

1. A screen projecting display method, comprising:
determining (S11) a display mode of a screen projecting content on a first device, wherein the screen projecting content comprises an image or a video obtained by rendering according to a screen size of the first device; and
generating (S12), according to the display mode and a screen size of a second device, a target screen projecting content corresponding to a target application, and displaying the target screen projecting content on the second device, wherein the target application comprises an application generating a screen projecting request in the first device.

2. The screen projecting display method according to claim 1, further comprising:
generating (S21), in a case that the second device receives the screen projecting content sent by the first device, a screen projecting component, associating the screen projecting component with the screen projecting content, and displaying the screen projecting component and the screen projecting content on the second device; and
determining (S22), in response to trigger operations for the screen projecting component, the display mode of the screen projecting content on the first device.

3. The screen projecting display method according to claim 1 or 2, wherein generating (S12), according to the display mode and the screen size of the second device, the target screen projecting content corresponding to the target application comprises:
determining (S31), according to the display mode and the screen size of the second device, a target rendered size; and
re-rendering (S32), according to the target rendered size, the target screen projecting content corresponding to the target application.

4. The screen projecting display method according to claim 3, wherein determining (S31), according to the display mode and the screen size of the second device, the target rendered size comprises:
taking (S41, S76), in a case that the display mode is a landscape display, the screen size of the second device as the target rendered size.

5. The screen projecting display method according to claim 3 or 4, wherein determining (S31), according to the display mode and the screen size of the second device, the target rendered size comprises:
taking (S51, S77), in a case that the display mode is a vertical screen display, a width of the screen size of the second device as a length of the target rendered size; and
obtaining (S52, S78), according to the length of the target rendered size, the target rendered size by determining a width of the target rendered size.

6. The screen projecting display method according to claim 1 or 2, wherein determining (S11) the display mode of the screen projecting content on the first device comprises:
determining (S73), in a case that the first device supports the landscape display of the screen projecting content, the display mode of the screen projecting content as a landscape display mode;
determining (S75), in a case that the first device supports the vertical screen display of the screen projecting content, the display mode of the screen projecting content as a vertical screen display mode; and
determining (S74), in a case that the first device simultaneously supports the landscape display and the vertical screen display of the screen projecting content, the display mode of the screen projecting content as the landscape display mode.

7. The screen projecting display method according to claim 2, wherein the trigger operations comprise at least one of clicking the screen projecting component, dragging the screen projecting component, or long pressing the screen projecting component.

8. A screen projecting display apparatus (800), comprising:
a determining component (801), configured to determine a display mode of a screen projecting content on a first device, wherein the screen projecting content comprises an image or a video obtained by rendering according to a screen size of the first device; and
an executor (802), configured to generate, according to the display mode and a screen size of a second device, a target screen projecting content corresponding to a target application, and display the target screen projecting content on the second device, wherein the target application comprises an application generating a screen projecting request in the first device.

9. The screen projecting display apparatus (800) according to claim 8, wherein the determining component (801) is further configured to:
generate, in a case that the second device receives the screen projecting content sent by the first device, a screen projecting component, associate the screen projecting component with the screen projecting content, and display the screen projecting component and the screen projecting content on the second device; and
determine, in response to trigger operations for the screen projecting component, the display mode of the screen projecting content on the first device.

10. The screen projecting display apparatus (800) according to claim 8 or 9, wherein the executor (802) is further configured to:
determine, according to the display mode and the screen size of the second device, a target rendered size; and
re-render, according to the target rendered size, the target screen projecting content corresponding to the target application.

11. The screen projecting display apparatus (800) according to claim 10, wherein the executor (802) is further configured to:
take, in a case that the display mode is a landscape display, the screen size of the second device as the target rendered size.

12. The screen projecting display apparatus (800) according to claim 10 or 11, wherein the executor (802) is further configured to:
take, in a case that the display mode is a vertical screen display, a width of the screen size of the second device as a length of the target rendered size; and
obtain, according to the length of the target rendered size, the target rendered size by determining a width of the target rendered size.

13. The screen projecting display apparatus (800) according to claim 8 or 9, wherein the determining component (801) is further configured to:
determine, in a case that the first device supports the landscape display of the screen projecting content, the display mode of the screen projecting content as a landscape display mode;
determine, in a case that the first device supports the vertical screen display of the screen projecting content, the display mode of the screen projecting content as a vertical screen display mode; and
determine, in a case that the first device simultaneously supports the landscape display and the vertical screen display of the screen projecting content, the display mode of the screen projecting content as the landscape display mode.

14. A non-temporary computer readable storage medium storing computer program instructions, wherein the program instructions, when executed by a processor, implement:
determining a display mode of a screen projecting content on a first device, wherein the screen projecting content comprises an image or a video obtained by rendering according to a screen size of the first device; and
generating, according to the display mode and a screen size of a second device, a target screen projecting content corresponding to a target application, and displaying the target screen projecting content on the second device, wherein the target application comprises an application generating a screen projecting request in the first device.

15. A chip, comprising a processor and an interface, wherein the processor is configured to read instructions to execute the screen projecting display method according to any one of claims 1 to 7.
